# EUROPÄISCHE PATENTSCHRIFT

(11) **EP 2 891 214 B1**
(45) Veröffentlichungstag und Bekanntmachung des Hinweises auf die Patenterteilung: **16.02.2022**
(21) Anmeldenummer: 13744559.9
(22) Anmeldetag: 01.08.2013
(51) Int. Cl.: H01R 13/66

(54) **STECKEREINHEIT UND ELEKTRISCHES GERÄT MIT EINER DERARTIGEN STECKEREINHEIT**
CONNECTOR UNIT AND ELECTRICAL DEVICE HAVING SUCH A CONNECTOR UNIT
UNITÉ DE FICHE ET APPAREIL ÉLECTRIQUE DOTÉ D'UNE TELLE UNITÉ DE FICHE

(30) Priorität: 28.08.2012 DE 102012107902
(43) Veröffentlichungstag der Anmeldung: 08.07.2015
(73) Patentinhaber: Lapp Engineering AG, 6330 Cham (CH)
(72) Erfinder: SCHÄDLE, Christian, 70565 Stuttgart (DE); KNEZAR, Karl, 73666 Baltmannsweiler (DE)
(74) Vertreter: Hoeger, Stellrecht & Partner Patentanwälte mbB
(86) Internationale Anmeldenummer: PCT/EP2013/066210
(87) Internationale Veröffentlichungsnummer: WO 2014/032906

(56) Entgegenhaltungen:
- EP-A1- 0 274 605
- WO-A1-2006/109330
- DE-A1-102009 034 886
- DE-A1-102010 022 140
- DE-A1-102010 025 728
- US-A1- 2009 251 832
- US-A1- 2009 251 832

## Beschreibung

Die Erfindung betrifft eine Steckereinheit für ein elektrisches Gerät, insbesondere für ein Gerät mit hoher Stromaufnahme, umfassend mindestens zwei im Betrieb des Geräts stromführende Strompfade, von denen jeder ein Kontaktelement mit einem Steckkontaktkörper sowie einem mit dem Stecckontaktkörper elektrisch leitend verbundenen Leitungsanschluss sowie ein mit dem Leitungsanschluss elektrisch leitend verbundenes Leitungsendstück eines zu dem Gerät führenden Zuleitungskabels umfasst, eine Steckerbrücke mit einem Kontaktträger, an welchem die Kontaktelemente so gehalten sind, dass die Steckkontaktkörper auf einer Seite des Kontaktträgers und die Leitungsanschlüsse auf der andere Seite des Kontaktträgers liegen, und ein Steckergehäuse, welches die Steckerbrücke, die Kabelanschlüsse und die Leitungsendstücke umschließt.

Derartige Steckereinheiten sind aus dem Stand der Technik bekannt, beispielsweise aus der EP0274605 A1 oder der DE102010025728 A1.

Bei diesen Steckereinheiten besteht das Problem, dass sich die Kontaktelemente bei durch Oberflächenkorrosion oder andere Erscheinungen erhöhten Übergangswiderständen aufgrund des hohen Stromflusses stark erwärmen und somit zu einer Beschädigung der Steckereinheit und/oder der mit der Steckereinheit verbundenen Steckeraufnahme führen können.

Der Erfindung liegt daher die Aufgabe zugrunde, eine Steckereinheit der gattungsgemäßen Art derart zu verbessern, dass eine strombedingte Erwärmung oder Erhitzung der Kontaktelemente möglichst zuverlässig erkannt werden kann.

Diese Aufgabe wird bei einer Steckereinheit der eingangs beschriebenen Art erfindungsgemäß dadurch gelöst, dass die Steckereinheit mindestens einen ersten Temperatursensor und mindestens einen zweiten Temperatursensor umfasst, dass der mindestens eine erste Temperatursensor in stärkerem Maße thermisch mit mindestens einem der Strompfade gekoppelt ist als der mindestens eine zweite Temperatursensor und dass der mindestens eine zweite Temperatursensor in stärkerem Maße thermisch mit mindestens einem Referenzbereich des Steckergehäuses gekoppelt ist als der mindestens eine erste Temperatursensor.

Der Vorteil der erfindungsgemäßen Lösung ist somit darin zu sehen, dass durch die unterschiedlich starke Kopplung des mindestens ersten und des mindestens zweiten Temperatursensors mit mindestens einem der Strompfade und die unterschiedlich starke Kopplung des mindestens einen zweiten und des mindestens einen ersten Temperatursensors mit einem Referenzbereich des Steckergehäuses die Möglichkeit besteht, zu erkennen, ob die festgestellte Erwärmung in der Steckereinheit dadurch zustande kommt, dass aufgrund des Stromflusses eine Erhitzung der Kontaktelemente eintritt oder dadurch zustande kommt, dass aufgrund einer Erhöhung einer Umgebungstemperatur eine Erwärmung der gesamten Steckereinheit eintritt.

Damit lässt sich eine strombedingte Erwärmung oder Erhitzung der Kontaktelemente sicher erkennen und auch sicher von einer allgemeinen Erwärmung der Steckereinheit, beispielsweise durch Umgebungseinflüsse, die nicht im Zusammenhang mit der Stromaufnahme steht, unterscheiden.

Hinsichtlich der Ankopplung des mindestens einen Temperatursensors an den mindestens einen der Strompfade wurden bislang keine näheren Angaben gemacht.

So sieht eine vorteilhafte Lösung vor, dass der mindestens eine erste Temperatursensor durch wärmeleitenden körperlichen Kontakt thermisch mit mindestens einem der Strompfade thermisch gekoppelt ist.

Ein derartiger wärmeleitender körperlicher Kontakt kann entweder durch direkten unmittelbaren Kontakt des ersten Temperatursensors mit einem der Strompfade erfolgen oder auch mittelbar durch eine die Wärmeleitung durch körperlichen Kontakt sicherstellende Masse, wie beispielsweise eine Wärmeleitmasse, eine Klebemasse oder eine Vergussmasse.

Besonders günstig ist es, wenn der mindestens eine erste Temperatursensor durch wärmeleitenden körperlichen Kontakt mindestens mit einem der Kontaktelemente thermisch gekoppelt ist.

Ein derartiger wärmeleitender körperlicher Kontakt kann entweder durch unmittelbare Anordnung des ersten Temperatursensors an oder in einem der Kontaktelemente realisiert sein. Es besteht aber auch die Möglichkeit durch mittelbaren Kontakt, beispielsweise mittels einer Klebemasse oder einer wärmeleitenden Masse oder einem anderen Einbettmaterial einen derartigen wärmeleitenden körperlichen Kontakt herzustellen.

Eine besonders günstige Lösung sieht, dass der mindestens eine Temperatursensor in wärmeleitendem körperlichem Kontakt mit der Steckerbrücke angeordnet ist.

In diesem Fall ist zwar kein direkter wärmeleitender körperlicher Kontakt zwischen einem der Kontaktelemente und dem ersten Temperatursensor hergestellt, der Vorteil dieser Lösung ist jedoch der, dass über die Erwärmung der Steckerbrücke eine Erfassung einer Erwärmung von der Kontakteinheiten möglich ist.

Besonders günstig ist es dabei, wenn der mindestens eine erste Temperatursensor in wärmeleitendem körperlichen Kontakt mit dem Kontaktträger angeordnet ist, da der Kontaktträger durch unmittelbares Berühren der Kontaktelemente das erste Element der Steckerbrücke ist, welches bei einer Erwärmung von einem der Kontaktelemente oder beiden Kontaktelementen selbst ebenfalls erwärmt wird.

Insbesondere besteht im Fall einer wärmeleitenden thermischen Kopplung des ersten Temperatursensors mit dem Kontaktträger die Möglichkeit, nur einen einzigen ersten Temperatursensor vorzusehen, welcher vorzugsweise zwischen den beiden Kontaktelementen, insbesondere mittig zwischen den beiden Kontaktelementen angeordnet ist, so dass der erste Temperatursensor eine Erwärmung erfasst, wenn eines der Kontaktelemente sich zu erwärmen beginnt.

Es besteht aber auch die Möglichkeit, an dem Kontaktträger zwei erste Temperatursensoren vorzusehen und zwar jeweils in geringem Abstand von den Kontakteinheiten, so dass die Erwärmung jedes der Kontaktelemente zu einer Erwärmung des diesem zugeordneten und am Kontaktträger angeordneten oder mit dem Kontaktträger gekoppelten jeweiligen ersten Temperatursensors führt.

Hinsichtlich der Anordnung des Referenzbereichs des Steckergehäuses wurden bislang ebenfalls keine näheren Angaben gemacht.

So sieht eine vorteilhafte Lösung vor, dass der Referenzbereich des Steckergehäuses ein Oberflächenbereich des Steckergehäuses ist, da vorzugsweise ein derartiger Oberflächenbereich des Steckergehäuses dann, wenn er weitgehend von den Strompfaden und insbesondere von dem Kontaktträger entkoppelt ist, auf einer Referenztemperatur liegt, die durch die Umgebungstemperatur der Steckereinheit bestimmt ist.

Besonders günstig ist es, wenn der Oberflächenbereich des Steckergehäuses ein im Griffbereich des Steckergehäuses liegender Oberflächenbereich ist.

Hinsichtlich der Anordnung des mindestens einen zweiten Temperatursensors mit thermischer Kopplung zu dem Referenzbereich wurden bislang keine näheren Angaben gemacht.

Beispielsweise wäre es denkbar, den zweiten Temperatursensor auf oder in dem Referenzbereich des Steckergehäuses anzuordnen.

Eine besonders günstige Lösung sieht jedoch vor, dass der mindestens eine zweite Temperatursensor innerhalb des Steckergehäuses und in wärmeleitendem körperlichem Kontakt mit dem Referenzbereich des Steckergehäuses angeordnet ist.

Diese Lösung hat den Vorteil, dass die Möglichkeit besteht, den mindestens einen zweiten Temperatursensor geschützt im Steckergehäuse anzuordnen, andererseits aber auch durch den wärmeleitenden körperlichen Kontakt mit dem Referenzbereich den zweiten Temperatursensor so anzuordnen, dass dieser eine dem Referenzbereich entsprechende Temperatur erfasst.

Ein derartiger wärmeleitender körperlicher Kontakt zu dem Referenzbereich kann durch eine spezielle zu dem Referenzbereich führende wärmeleitende Masse erfolgen.

Es besteht aber auch die Möglichkeit, einen derartigen wärmeleitenden körperlichen Kontakt zwischen dem zweiten Temperatursensor und dem Referenzbereich des Steckergehäuses dadurch zu erreichen, dass dieser durch ein das Steckergehäuse bildendes Material, im Fall eines gegossenen Steckergehäuses die das Steckergehäuse bildende Gießmasse, gebildet wird.

Dabei lässt sich die thermische Kopplung mit dem Referenzbereich durch einen geringen Abstand des zweiten Temperatursensors von dem Referenzbereich sicherstellen, ohne dass hohe Anforderungen an die Wärmeleitfähigkeit des den wärmeleitenden körperlichen Kontakt zwischen dem Referenzbereich und dem zweiten Temperatursensor erstellenden Materials notwendig sind.

Hinsichtlich der Anordnung des mindestens einen ersten Temperatursensors wurden bislang keine näheren Angaben gemacht.

So wäre es beispielsweise denkbar, den ersten Temperatursensor unmittelbar an der Steckerbrücke, vorzugsweise an dem Kontaktträger, anzuordnen.

Eine konstruktiv besonders günstig realisierbare Lösung sieht jedoch vor, dass der mindestens eine Temperatursensor auf einem Träger angeordnet ist.

Desgleichen wäre es denkbar, den mindestens einen zweiten Temperatursensor in dem Steckergehäuse oder durch Einbettung desselben in das Steckergehäuse anzuordnen.

Um die Lage des mindestens einen zweiten Temperatursensors jedoch definiert festlegen zu können, hat es sich als vorteilhaft erwiesen, wenn der mindestens eine zweite Temperatursensor ebenfalls auf einem Träger angeordnet ist.

Dabei könnten der Träger für den ersten Temperatursensor und der Träger für den zweiten Temperatursensor voneinander getrennt sein.

Eine besonders günstige Lösung sieht jedoch vor, dass der mindestens eine erste Temperatursensor und der mindestens eine zweite Temperatursensor auf einem gemeinsamen Träger angeordnet sind.

Hinsichtlich der Fixierung des Trägers für den ersten und/oder zweiten Temperatursensor innerhalb der Steckereinheit wurden bislang keine näheren Angaben gemacht.

Eine besonders günstige Lösung sieht dabei vor, dass der Träger an der Steckerbrücke abgestützt ist.

Besonders günstig ist es, wenn der Träger an dem Kontaktträger der Steckerbrücke abgestützt ist.

Noch vorteilhafter ist es, wenn der Träger mit der Steckerbrücke fest verbunden ist.

Dabei besteht beispielsweise die Möglichkeit den Träger mit der Steckerbrücke durch ein Verschweißen oder ein Verkleben zu verbinden und damit den ersten Temperatursensor und/oder den zweiten Temperatursensor relativ zur Steckerbrücke definiert anzuordnen.

Hinsichtlich der Ausbildung des Steckergehäuses wurden im Zusammenhang mit der bisherigen Erläuterung der einzelnen Ausführungsbeispiele keine näheren Angaben gemacht.

So wäre es beispielsweise denkbar das Steckergehäuse in Form einer Außenschale als ein- oder mehrteiliges Gehäuse auszubilden, welches an der Steckerbrücke fixierbar oder mit dieser verbindbar ist und dabei das Zuleitungskabel relativ zur Steckerbrücke fixiert, wobei in einem Innenraum des Steckergehäuses dann die Leitungsanschlüsse und die Leitungsendstücke angeordnet sind.

Eine besonders günstige Lösung sieht jedoch vor, dass das Steckergehäuse ein an die Steckerbrücke und das Zuleitungskabel angegossenes Steckergehäuse ist, das heißt, dass das Steckergehäuse einerseits durch Angießen an die Steckerbrücke und andererseits durch Angießen an das Zuleitungskabel diese fest miteinander verbindet und somit mit diesen eine nur durch Zerstörung trennbare Einheit bildet.

Besonders vorteilhaft ist es dabei, wenn das Steckergehäuse die Steckerbrücke und die Leitungsendstücke sowie die Leitungsanschlüsse einbettet.

Durch diese Einbettung der Leitungsendstücke und der Leitungsanschlüsse wird ferner auch ein gegenüber äußeren Einflüssen dichter Abschluss zwischen den Leitungsendstücken und dem Zuleitungskabel sowie den Leitungsanschlüssen und der Steckerbrücke realisiert, der für ein Erfüllen der Sicherheitsanforderungen an die Steckereinheit von Bedeutung ist.

Ferner ist vorzugsweise vorgesehen, dass das Steckergehäuse den mindestens einen ersten Temperatursensor und den mindestens einen zweiten Temperatursensor einbettet.

Durch diese Einbettung des mindestens einen ersten Temperatursensors und/oder mindestens einen zweiten Temperatursensors wird sichergestellt, dass der jeweils eingebettete Temperatursensor einerseits gegenüber äußeren Einflüssen geschützt ist und andererseits mit definierter Umgebung und definierter thermischer Ankopplung im Steckergehäuse angeordnet ist.

Insbesondere ist bei einem derartigen an die Steckerbrücke und das Zuleitungskabel angegossenen Steckergehäuse vorgesehen, dass das Steckergehäuse den Träger einbettet.

Um sicherzustellen, dass die von dem mindesten einen ersten Temperatursensor und dem mindestens einen zweiten Temperatursensor erfassten Temperaturwerte durch das elektrische Gerät berücksichtigt werden können, ist vorzugsweise vorgesehen, dass der mindestens eine erste Temperatursensor und der mindestens eine zweite Temperartursensor über durch das Zuleitungskabel geführte Temperatursensorleitungen mit einer Schaltung des elektrischen Geräts verbunden sind.

Somit besteht in einfacher Art und Weise die Möglichkeit, die von dem mindestens einen ersten Temperatursensor und dem mindestens einen zweiten Temperatursensor gemessenen Werte auszuwerten und beim Betrieb des elektrischen Geräts zu berücksichtigen.

Ergänzend oder alternativ zu der eingangs genannten Steckereinheit betrifft die Erfindung ebenfalls ein elektrisches Gerät, dessen Zuleitungskabel mit einer Steckereinheit versehen ist, wobei erfindungsgemäß die Steckereinheit gemäß einem oder mehreren der voranstehenden Merkmale ausgebildet ist.

Insbesondere ist dabei vorgesehen, dass das elektrische Gerät eine Auswerteschaltung umfasst, die einen ersten Temperaturwert des mindestens einen ersten Temperatursensors und einen zweiten Temperaturwert des mindestens einen zweiten Temperatursensors erfasst und auswertet.

Insbesondere besteht bei einem derartigen elektrischen Gerät die Möglichkeit, für den Betrieb des elektrischen Geräts den ersten Temperaturwert und den zweiten Temperaturwert zu berücksichtigen.

Beispielsweise ist hierbei vorgesehen, dass die Auswerteschaltung den ersten Temperaturwert und den zweiten Temperaturwert miteinander vergleicht und dadurch eine strombedingte Erwärmung von mindestens einem der Kontaktelemente erkennt.

Dabei bestünde die Möglichkeit jeweils zu einem bestimmten Zeitpunkt den ersten Temperaturwert und den zweiten Temperaturwert zu erfassen und miteinander zu vergleichen.

Besonders günstig ist es, wenn die Auswerteschaltung den ersten Temperaturwert und den zweiten Temperaturwert während eines Auswerteintervalls erfasst und miteinander vergleicht.

Ein derartiger Vergleich des ersten Temperaturwerts und des zweiten Temperaturwertes während eines Auswerteintervalls erlaubt beispielsweise kurzzeitige Variationen, die durch undefinierte Einflüsse zustande kommen, zu unterdrücken, indem der Gesamtverlauf während des Auswerteintervalls berücksichtigt wird.

Insbesondere ist dabei vorgesehen, dass die Auswerteschaltung die Änderungen des ersten Temperaturwertes und des zweiten Temperaturwertes innerhalb des Auswerteintervalls vergleicht und somit über die Änderungen während des Auswerteintervalls erfassen kann, inwieweit aufgrund der Art der Änderung eine Gefährdung der Steckereinheit und/oder der Steckeraufnahme aufgrund einer zu starken Erhitzung der Kontaktelemente besteht.

Insbesondere ist es vorteilhaft, wenn die Auswerteschaltung dann, wenn der erste Temperaturwert über dem zweiten Temperaturwert liegt, eine strombedingte Erwärmung von mindestens einem der Kontaktelemente erkennt.

Insbesondere lässt sich dabei die Auswertung so durchführen, dass die Auswerteschaltung aus der Differenz des ersten Temperaturwerts und des zweiten Temperaturwerts ein Maß für die strombedingte Erwärmung von mindestens einem der Kontaktelemente ermittelt.

Ein derartiges Maß für die strombedingte Erwärmung von mindestens einem der Kontaktelemente erfolgt somit aufgrund einer Relativmessung des Temperaturwertes des ersten Temperatursensors bezogen auf den Temperaturwert des zweiten Temperatursensors, so dass dadurch Umgebungseinflüsse, wie beispielsweise die Umgebungstemperatur der Steckereinheit keine Auswirkung haben.

Eine besonders günstige Lösung sieht vor, dass die Auswerteschaltung dann, wenn das Maß für die strombedingte Erwärmung des mindestens einen Kontaktelements einen Schwellwert überschreitet, ein Strombegrenzungssignal erzeugt.

In diesem Fall ist die Auswerteschaltung in der Lage festzustellen, dass ein durch die strombedingte Erwärmung des mindestens einen Kontaktelements sich die Temperatur der Steckereinheit einem noch subkritischen Zustand entspricht oder sich einem kritischen Zustand annähert, der es erforderlich macht, diesen Zustand mittels eines Strombegrenzungssignals zu vermeiden.

Vorzugsweise ist dabei die Auswerteschaltung mit einer Steuerschaltung für die Stromaufnahme des Geräts gekoppelt und die Steuerschaltung reduziert bei Anliegen des Stromreduzierungssignals der Auswerteschaltung die Stromaufnahme des elektrischen Geräts.

Mit dieser Lösung lassen sich vorzugsweise kritische Zustände der Steckereinheit oder der Steckeraufnahme durch Reduzierung der Stromaufnahme des elektrischen Geräts vermeiden.

Dabei kann das Stromreduzierungssignal dazu ausgenützt werden, dass die Steuerschaltung lediglich die Stromaufnahme reduziert, um die strombedingte Erwärmung des mindestens einen der Kontaktelemente zu reduzieren.

Dies ist beispielsweise dann vorgesehen, wenn ein Schwellwert vorgesehen ist, ab welchem eine Reduzierung der Stromaufnahme ausreicht, um einen kritischen Zustand der Steckereinheit zu vermeiden.

Alternativ oder ergänzend hierzu sieht eine andere Möglichkeit vor, dass die Steuerschaltung die Stromaufnahme des elektrischen Geräts bei Anliegen eines Stromreduzierungssignals unterbricht.

In diesem Fall kann sichergestellt werden, dass ein kritischer Zustand der Steckereinheit und auch der Steckeraufnahme vermieden werden kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines erfindungsgemäßen elektrischen Geräts mit einem mit einer erfindungsgemäßen Steckereinheit versehenen Zuleitungskabel;
- Fig. 2: eine vergrößerte Darstellung der erfindungsgemäßen Steckereinheit;
- Fig. 3: eine perspektivische Darstellung einer Steckerbrücke einer erfindungsgemäßen Steckereinheit;

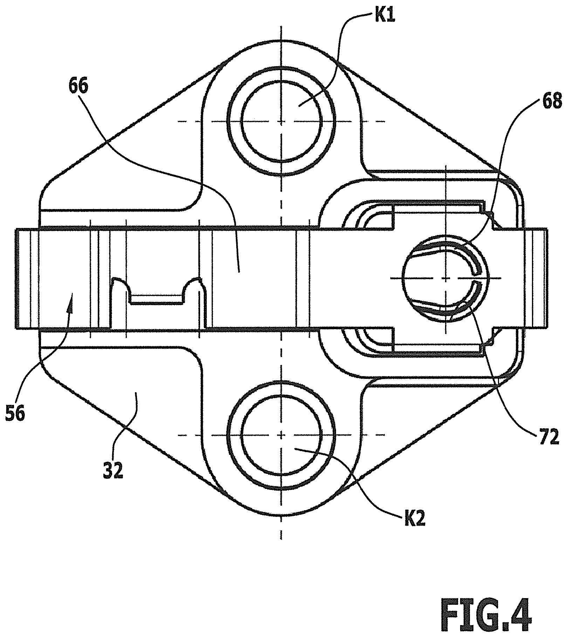

- Fig. 4: eine Draufsicht auf die Steckerbrücke in Richtung des Pfeils A in Fig. 3;
- Fig. 5: eine Seitenansicht in Richtung des Pfeils B in Fig. 3 einer erfindungsgemäßen Steckerbrücke versehen mit einem Träger und einem ersten Temperatursensor sowie einem zweiten Temperatursensor;
- Fig. 6: einen Schnitt längs Linie 6-6 in Fig. 5;
- Fig. 7: eine Darstellung eines Verlaufs eines ersten Temperaturwerts und eines zweiten Temperaturwerts während eines Auswerteintervalls im Fall einer Temperaturerhöhung in einer Umgebung der Steckereinheit;
- Fig. 8: eine schematische Darstellung des Verlaufs des ersten Temperaturwerts und des zweiten Temperaturwerts während eines Auswerteintervalls im Fall einer strombedingten Temperaturerhöhung im Bereich mindestens einer Kontakteinheit und
- Fig. 9: einen Schnitt ähnlich Fig. 6 durch ein zweites Ausführungsbeispiel einer Steckerbrücke mit einem Träger einer erfindungsgemäßen Steckereinheit.

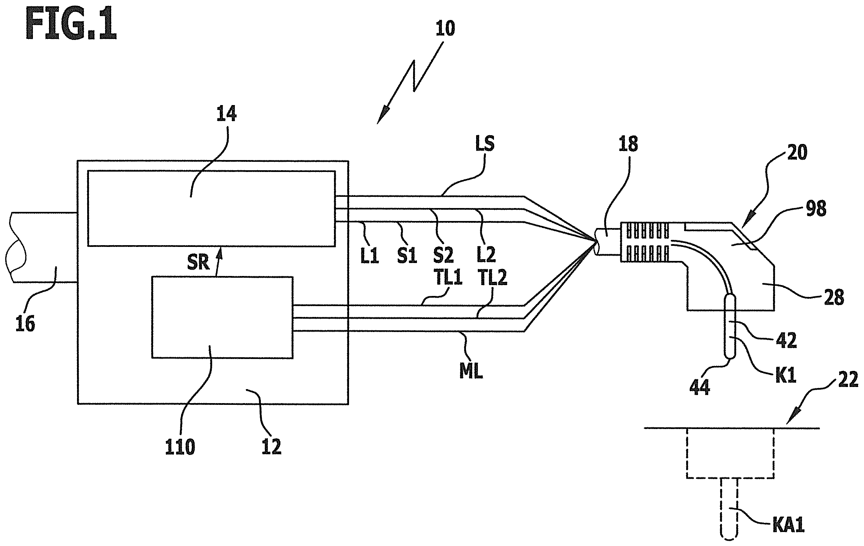

Ein in Fig. 1 dargestelltes schematisches elektrisches Gerät 10, beispielsweise ein Ladegerät für eine Batterie, insbesondere eine Fahrzeugbatterie, umfasst ein als Ganzes mit 12 bezeichnetes Gerätegehäuse, in welchem eine Steuerschaltung 14 vorgesehen ist, welche Strom und Spannung in einem von dem Gerätegehäuse 12 wegführenden Ladekabel 16 einerseits steuert und andererseits auch eine Stromaufnahme eines vom Gerätegehäuse 12 wegführenden Zuleitungskabels 18 steuert, welches endseitig mit einer als Ganzes mit 20 bezeichneten Steckereinheit versehen ist, wobei die Steckereinheit 20 in eine als Ganzes mit 22 bezeichnete Steckeraufnahme einsteckbar ist.

Vorzugsweise ist dabei die Steckereinheit 20 als normüblicher Schutzkontaktstecker ausgebildet, welcher in eine entsprechende normübliche Schutzkontaktsteckdose als Steckeraufnahme 22 einsteckbar ist.

Beispielsweise ist die Steckereinheit 20 gemäß der Norm CEE 7/7 ausgebildet und auch die Steckeraufnahme 22 entsprechend dieser Norm ausgebildet.

Bei einer derartigen Steckereinheit 20 und einer derartigen Steckeraufnahme 22 handelt es sich um übliche in einer Gebäudeinstallation vorgesehene Steckverbindungen zur Versorgung beliebiger elektrischer Geräte, die mit einer derartigen normüblichen Steckereinheit 20 versehen sind.

Durch das Zuleitungskabel 18 führen beim Betrieb des elektrischen Geräts 10, also beispielsweise bei einem Ladevorgang einer Batterie die Strompfade S1 und S2 über die Leitung L1 und das Kontaktelement K1 bzw. die Leitung L2 und das Kontaktelement K2 den für die Erzeugung des Ladestroms erforderlichen Strom während die Schutzleitung LS dazu dient, im Beschädigungsfall, beispielsweise im Fall eines Kurzschlusses, den Kurzschlussstrom abzuführen.

Bei diesen üblichen normgemäßen Steckverbindungen fließen üblicherweise, zumindest, über längere Zeiträume, Ströme die kleiner als 10 Ampere sind.

Werden jedoch beispielsweise Fahrzeugbatterien geladen, so ist dieser Ladevorgang sehr schnell durchzuführen, was wiederum zur Folge hat, dass die Stromaufnahme des elektrischen Geräts 10, wenn es sich um ein Batterieladegerät handelt, signifikant höher ist.

In diesem Fall fließen durch in dem Zuleitungskabel 18 und der Steckereinheit 20 vorgesehene Strompfade S1 und S2 (dies sind bei üblichem Wechselstrom zwei Strompfade, bei Drehstrom drei Strompfade) wesentlich höhere Ströme, was zur Folge hat, dass durch Kontaktalterung oder Kontaktkorrosion Übergangswiderständen zwischen den Kontaktelementen K1 und K2 sowie den entsprechenden Kontaktaufnahmen KA1 und KA2 der Steckereinheit 20 bzw. der Steckeraufnahme 22 auftreten, die im Bereich derselben zu einer Wärmeentwicklung führen und diese Wärmeentwicklung kann zur teilweisen Zerstörung der Steckereinheit 20 und/oder der Steckeraufnahme 22 führen.

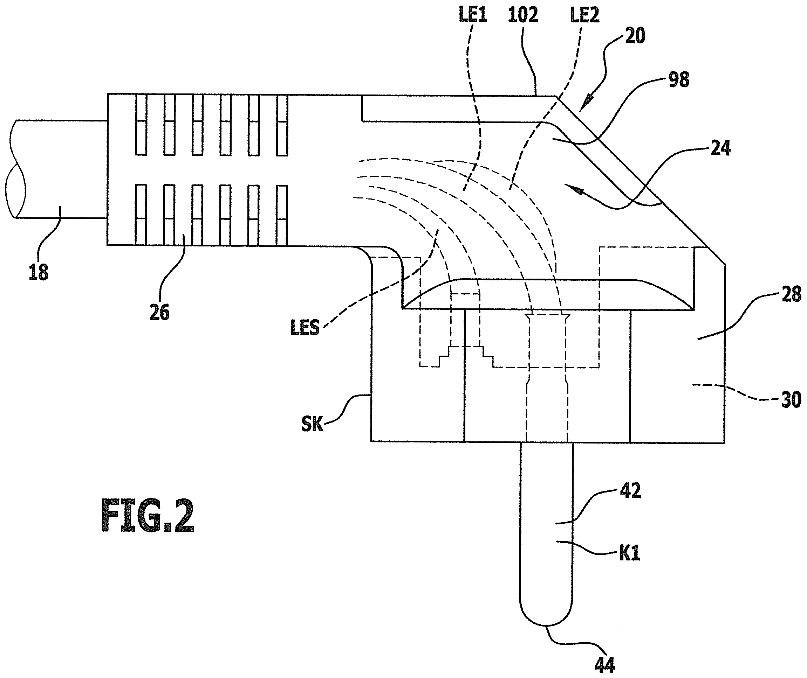

Wie in Fig. 2 dargestellt, umfasst die als Ganzes mit 20 bezeichnete Steckereinheit ein Steckergehäuse 24, welches beispielsweise mit einer Zuleitungskabelaufnahme 26 das Zuleitungskabel 18 umschließt, wobei das Zuleitungskabel 18 innerhalb des Steckergehäuses 24 durch Entfernen eines Kabelmantels in Leitungsendstücke LE1 und LE2 der Leitungen L1 bzw. L2 und in das Leitungsendstück LES der Leitung LS aufteilt, die zu den einzelnen Kontaktelementen K1 bzw. K2 im Fall der Strompfade S1 und S2 und SK im Fall der Schutzleitung LS führen.

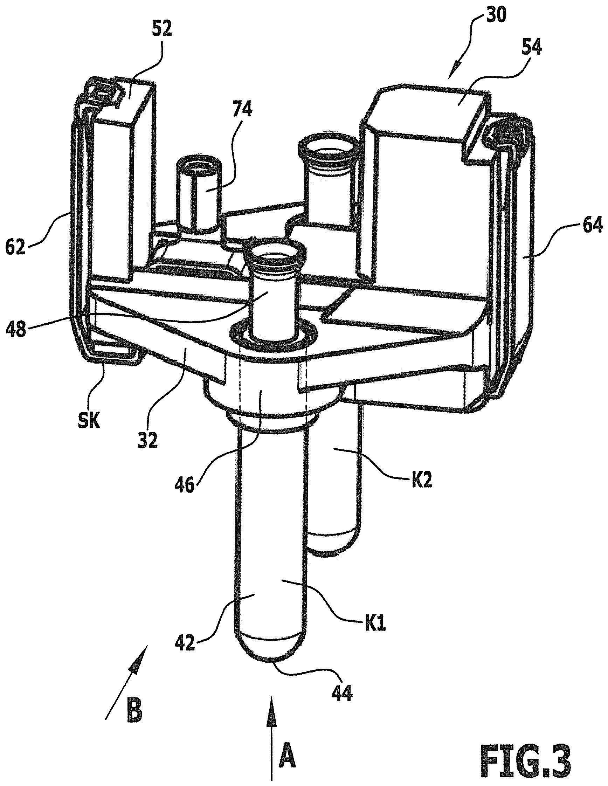

Diese Kontaktelemente K1, K2 und SK sind, wie in Fig. 3 dargestellt, in einer als Ganzes mit 30 bezeichneten Steckerbrücke gehalten, die ihrerseits von dem Steckergehäuse 24 aufgenommen ist, und zwar in einem Kontaktaufnahmebereich 28 des Steckergehäuses 24.

Die Steckerbrücke 30 ist ihrerseits ebenfalls beispielsweise gemäß der Norm CEE 7/7 ausgebildet und umfasst ihrerseits einen Kontaktträger 32, in welchen die Kontaktelemente K1 und K2 eingesetzt sind.

Dabei umfasst jedes der Kontaktelemente K1 und K2 einerseits einen Stecckontaktkörper 42, welcher sich ausgehend von dem Kontaktträger 32 bis zu einem Ende 44 erstreckt, einen sich an einer dem Ende 44 gegenüberliegenden Seite des Steckkontaktkörpers 42 an diesen anschließenden Haltekörper 46, der in dem Kontaktträger 32 eingebettet sitzt, und einen über den Kontaktträger 32 auf einer dem Steckkontaktkörper 42 gegenüberliegenden Seite hinaus sich erstreckenden Kabelanschluss 48, welcher mit dem jeweiligen Leitungsendstück LE verbindbar ist.

Beispielsweise ist der Kabelanschluss 48 dabei als sogenannte Crimpverbindung ausgebildet, das heißt, dass der Kabelanschluss durch Deformation mit dem elektrischen Leiter des jeweiligen Leiterendstücks LE elektrisch verbindbar ist.

Vorzugsweise sind dabei der Steckkontaktkörper 42, der Haltekörper 46 und der Kabelanschluss 48 als zusammenhängendes einstückiges Teil ausgebildet, das in den Kontaktträger 32 durch Umspritzen im Bereich des Haltekörpers 46 eingebettet ist.

Der Kontaktträger 32 trägt außerdem, wie in Fig. 3 dargestellt, noch zwei Führungskörper 52 und 54 für den Schutzkontakt SK, der einerseits als U-förmiger Bügelkontakt 56 ausgebildet ist, welcher zwei Seitenschenkel 62 und 64 umfasst, die durch einen Mittelschenkel 66 miteinander verbunden sind, wobei die beiden Seitenschenkel 62 und 64 eine Schutzkontaktverbindung gemäß der europäischen Norm IEC 60884-1 herzustellen in der Lage sind.

Die Seitenschenkel 62 und 64 sind dabei durch jeweilige Außenseiten der Führungskörper 52 und 54 geführt.

Darüber hinaus ist der Führungskörper 54 noch zusätzlich als Hohlkörper ausgebildet, in welchem eine Steckkontakthülse 68 angeordnet ist, die an dem Mittelschenkel 66 gehalten ist und in welche durch einen Durchbruch 72 im Mittelschenkel ein Kontaktstift der Steckeraufnahme 22 gemäß der europäischen Norm IEC 60884-1 hindurchsteckbar ist, so dass bei einer derartigen Schutzkontaktverbindung der Schutzkontakt über die Steckkontakthülse 68, angeordnet in dem hohlen Führungsköper 54, herstellbar ist.

Zur Verbindung mit dem Leitungsendstück LES der Schutzleitung LS ist an den Mittelschenkel 66 noch zusätzlich ein Kabelanschluss 74 angeformt, welcher ebenfalls so ausgebildet ist, dass mit diesem eine Crimpverbindung mit dem elektrischen Leiter des Leitungsendstücks LES herstellbar ist.

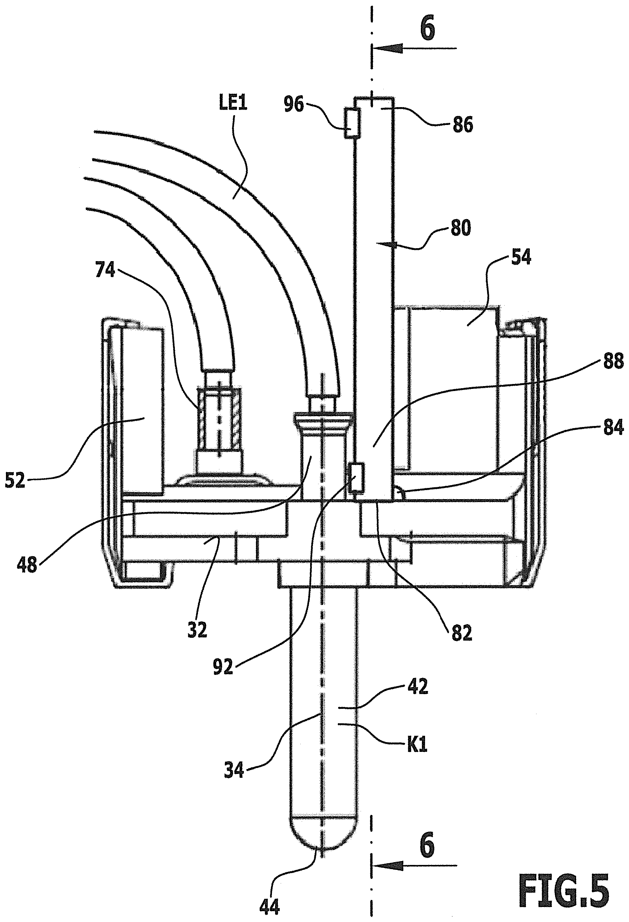

Um feststellen zu können, ob im Bereich eines der Kontaktelemente K1 oder K2 eine Erwärmung aufgrund eines erhöhten Übergangswiderstandes auftritt, ist innerhalb des Steckergehäuses 24 in der Steckereinheit 20 ein Träger 80 vorgesehen, der sich quer zum Kontaktträger 32 erstreckt, wobei sich der Kontaktträger 32 seinerseits quer zur Mittelachse 34 der jeweiligen Kontaktelemente K1 und K2 erstreckt (Fig. 5).

Somit erstreckt sich der Träger 80 vorzugsweise in erster Näherung parallel zu der Mittelachse 34 der Kontaktelemente K1 und K2, wobei in erster Näherung parallel auch noch eine Neigung von +/- 30° Grad gegenüber einem exakt parallelen Verlauf miteinschließt.

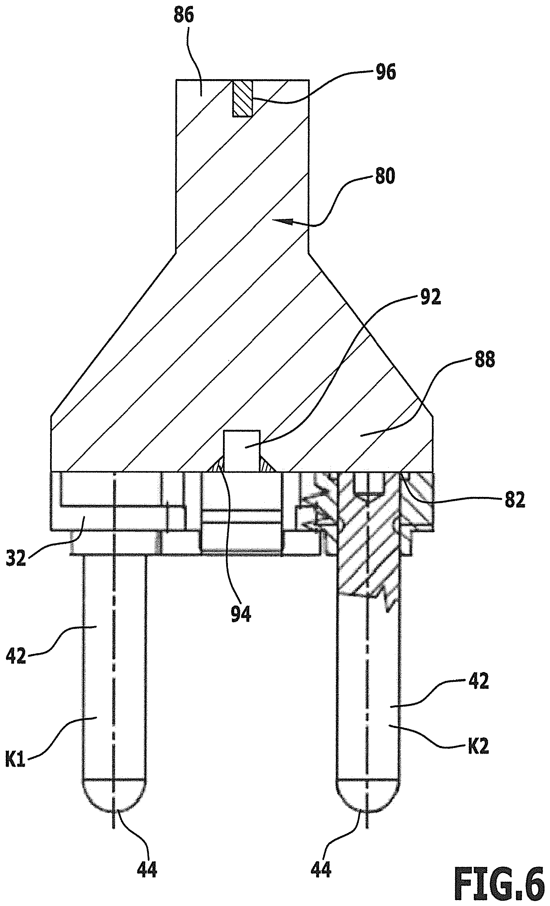

Der Träger 80 stützt sich dabei, wie in Fig. 5 und 6 dargestellt, mit einer Stirnseite 82 an dem Kontaktträger 32 ab und ist vorzugsweise über eine Klebeverbindung 84 fest mit dem Kontaktträger 32 verbunden.

Ferner liegt der Träger vorzugsweise zwischen den Kabelanschlüssen 48 der Kontaktelemente K1 und K2 und dem Führungskörper 54 der Steckerbrücke 30.

An dem Träger 80 ist ein erster Temperatursensor 92 angeordnet, welcher an einem Fußbereich 88 beispielsweise auf einer den Kabelanschlüssen 48 zugewandten Seite des Trägers 80 sitzt und außerdem nahe des Kontaktträgers 32 sitzt, vorzugsweise noch an dem Kontaktträger 32 anliegt, so dass eine körperliche wärmeleitende Verbindung zwischen den Kontaktelementen K1 und K2 über den Kontaktträger 32 zum ersten Temperatursensor 92 erfolgt, wobei es sich hier um eine körperliche Wärmeleitung unter Mitwirkung des Kontaktträgers 32 handelt.

Vorzugsweise sitzt dabei der erste Temperatursensor 92 mittig zwischen den Kontaktelementen K1 und K2, vorzugsweise mittig zwischen deren Kabelanschlüssen 48, so dass ein Wärmeeintrag von jedem der Kontaktelemente K1 und K2 in den ersten Temperatursensor 92 in im Wesentlichen identischem Maße erfolgt und somit unabhängig davon, ob sich das Kontaktelement K1 oder das Kontaktelement K2 zuerst erwärmt, jeweils der Wärmeeintrag in den ersten Temperatursensor 92 näherungsweise identisch ist.

Ferner ist vorzugsweise noch eine verbesserte thermische Ankopplung des ersten Temperatursensors 92 mit der Kontaktbrücke 32 durch eine Klebemasse 94 oder eine wärmeleitende Masse 94 vorgesehen, welche eine möglichst gute thermische Kopplung zwischen dem Kontaktträger 32 und dem ersten Temperatursensor 92 sicherstellt.

An dem Träger 80 ist ferner noch ein zweiter Temperatursensor 96 vorgesehen, welcher an einem dem Kontaktträger 32 und dem Fußbereich 88 abgewandten und somit auch der Stirnseite 82 abgewandten Endbereich 86 des Trägers 80 sitzt und somit vom ersten Temperatursensor 92 und auch von dem Kontaktträger 32 sowie auch von den Leitungsendstücken LE1 und LE2 eine möglichst große Entfernung aufweist.

Vorzugsweise ist der Träger 80 so ausgebildet, dass der Endbereich 86 in einem in Fig. 2 mit 98 bezeichneten Griffbereich des Steckergehäuses 24 liegt, der am Steckergehäuse 24 den Kontaktaufnahmebereich 28 gegenüberliegend angeordnet ist und somit möglichst weitgehend von den Kontaktelementen K1 und K2 und auch den Leitungsendstücken LE1 und LE2 thermisch entkoppelt ist.

Vorzugsweise liegt der zweite Temperatursensor 96 möglichst nahe einer Oberfläche 102 des Griffbereichs 98 des Steckergehäuses 24, so dass der zweite Temperatursensor 96 möglichst gut thermisch mit der Oberfläche 102 gekoppelt ist und somit eine Temperatur der Oberfläche 102 von dem zweiten Temperatursensor 96 erfasst wird, wobei diese Temperatur der Oberfläche 102 im Griffbereich 98 die Temperatur der Umgebung der Steckereinheit 20 repräsentiert und somit eine Referenztemperatur darstellt, die ein Maß für die Temperatur für die Umgebung der Steckereinheit 20 darstellt.

Wie in Fig. 2 dargestellt, sind die beiden Temperatursensoren 92 und 94 über eine gemeinsame Masseleitung M sowie über die Temperatursensorleitungen TL1 und TL2, die alle ebenfalls in dem Zuleitungskabel 18 verlaufen, mit einer Auswerteschaltung 110 des elektrischen Geräts 10, die Auswerteschaltung 110 in dem Gerätegehäuse 12 angeordnet ist.

Obwohl das Steckergehäuse 24 durch Umspritzen der Steckerbrücke 30, des Trägers 80 mit dem ersten Temperatursensor 92 und dem zweiten Temperatursensor 96 sowie Umspritzen der Leitungsendstücke LE1, LE2 und LES sowie der zu den Temperatursensoren 92 und 94 führenden Temperatursensorleitungen TL1, TL2 und ML im Bereich der Steckereinheit 20 gebildet ist, ist die thermische Kopplung durch das das Steckergehäuse 24 bildende Material zwischen dem ersten Temperatursensor 92 und dem zweiten Temperatursensor 96 durch dieses Material vernachlässigbar, so dass der vom ersten Temperatursensor 92 gemessene Temperaturwert T1 im Wesentlichen durch die Erwärmung des Kontaktelements K1 und/oder des Kontaktelements K2 über die Wärmeleitung des Kontaktträgers dominiert ist, während der Temperaturwert T2 durch die Temperatur der Oberfläche 102 im Griffbereich 98, allerdings in diesem Fall körperlich übertragen durch das Material des Steckergehäuses 24 dominiert ist.

Auch die Wärmeleitung des Trägers 80 zwischen dem ersten Temperatursensor 92 und dem zweiten Temperatursensor 94 ist vernachlässigbar.

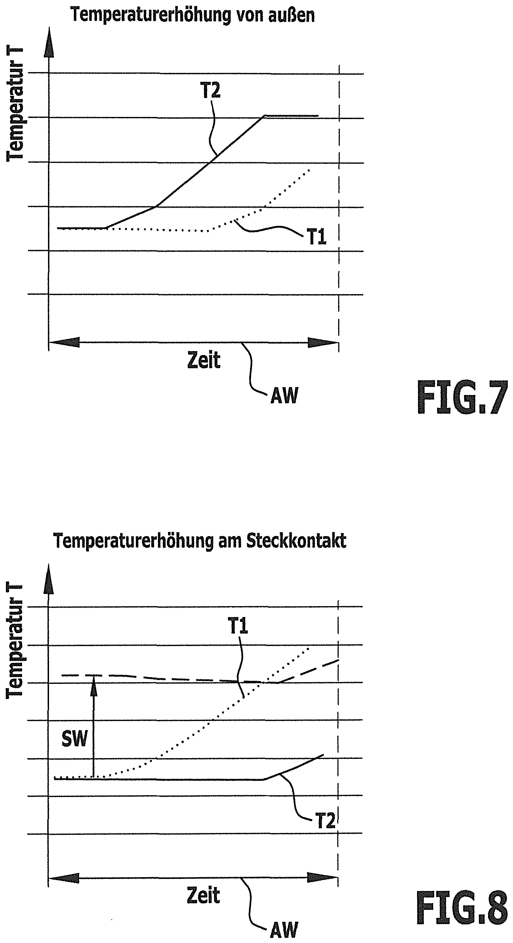

Die Auswerteschaltung 110 ist nun in der Lage, wie in Fig. 7 und 8 dargestellt, zu unterscheiden, ob eine Temperaturerhöhung in der Steckereinheit 20 durch die Umgebung hervorgerufen wird oder durch die Erwärmung einer der Kontakteinheiten K1 und/oder K2.

Erfolgt beispielsweise eine Temperaturerhöhung in der Umgebung der Steckereinheit 20, so wird dies zur Folge haben, dass zunächst ein Temperaturwert T2 des zweiten Temperatursensors 96, der von der Auswerteschaltung 110 erfasst wird, innerhalb des vorgesehenen Auswerteintervalls AW ansteigt, während der Temperaturwert T1 des ersten Temperatursensors 92 unter dem Temperaturwert T2 liegt und beispielsweise zumindest verzögert ansteigt und erst mit Verzögerung in gleichem Maße ansteigt, wie der Temperaturwert T2 des zweiten Temperatursensors, wie in Fig. 7 dargestellt.

Erfolgt dagegen, wie in Fig. 8 dargestellt, eine Erwärmung im Bereich von einer oder beiden Kontakteinheiten K1 und/oder K2, so wird der Temperaturwert T1 des ersten Temperatursensors 92 innerhalb des Auswerteintervalls AW sehr schnell ansteigen, während der Temperaturwert T2 des zweiten Temperatursensors wenn überhaupt dann nur mit Verzögerung ansteigt, jedoch unterhalb des Temperaturwertes T1 bleibt.

Damit ist die Auswerteschaltung 110 in der Lage durch die Differenzbildung zwischen den Temperaturwerten T1 des ersten Temperatursensors 92 und den Temperaturwerten T2 des zweiten Temperatursensors 96 zu erkennen, ob die Erwärmung in der Steckereinheit 20 bedingt ist durch eine Erwärmung in der Umgebung der Steckereinheit 20, wenn nämlich der Temperaturwert T2 größer ist als der Temperaturwert T1, oder bedingt ist durch eine Erwärmung im Bereich der Kontakteinheiten K1 und K2, wenn nämlich der Temperaturwert T1 größer ist als der Temperaturwert T2.

Die Auswerteschaltung 110 ist darüber hinaus in der Lage, die gebildete Differenz zwischen dem Temperaturwert T1 und dem Temperaturwert T2 mit einem entsprechend dem Aufbau der Steckereinheit 20 zu definierenden Schwellwert SW zu vergleichen und dann, wenn die Temperaturdifferenz zwischen dem Temperaturwert T1 und dem Temperaturwert T2 den Schwellwert SW überschreitet, ein Stromreduzierungssignal SR zu erzeugen und der Steuerschaltung 14 zu übermitteln, welche entweder bei Anliegen des Stromreduzierungssignals SR eine Stromaufnahme über das Zuleitungskabel 18 unterbricht oder zumindest reduziert, um eine weitere Erwärmung der Steckereinheit 20 zu verhindern.

Beispielsweise ist es auch denkbar, zwei Schwellwerte SW vorzusehen, wobei ein erster Schwellwert SW zu einem ersten Stromreduzierungssignal SR führt, welches die Steuerschaltung 14 veranlasst, die Stromaufnahme durch das Zuleitungskabel 18 und somit auch die Steckereinheit 20 zu reduzieren, und einen zweiten Schwellwert SW vorzusehen, bei dessen Überschreitung ein zweites Stromreduzierungssignal SR der Steuerschaltung 14 übermittelt wird, welche bei diesem zweiten Stromreduzierungssignal SR die Stromaufnahme über das Zuleitungskabel 18 und die Steckereinheit 20 unterbricht, um eine Zerstörung der Steckereinheit 20 oder der Steckeraufnahme 22 zu verhindern.

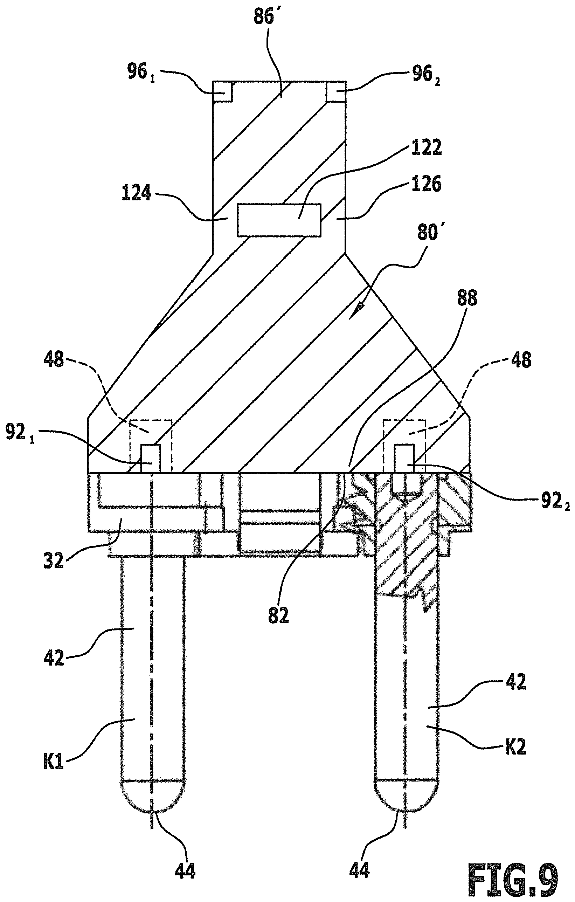

Bei einem zweiten Ausführungsbeispiel einer Steckereinheit 20 für ein erfindungsgemäßes elektrisches Gerät, dargestellt in Fig. 9, ist der Träger 80' insoweit anders ausgebildet, als dieser zwei erste Temperatursensoren 92₁ und 92₂ trägt, wobei die zwei ersten Temperatursensoren 92₁ bzw. 92₂ jeweils dem entsprechenden Kabelanschluss 48 der jeweiligen Kontakteinheit K1 bzw. K2 benachbart angeordnet sind, um damit zu erreichen, dass jede Temperaturänderung und insbesondere jede Erwärmung in einem der Kontaktelemente K1 und/oder K2 von dem jeweiligen ersten Temperatursensor 92₁ bzw. 92₂ möglichst schnell erfasst wird, da in diesem Fall der jeweilige Temperatursensor 92₁ bzw. 92₂ eine noch bessere thermische Kopplung zu dem jeweiligen Kontaktelement K1 und/oder K2 aufweist als beim ersten Ausführungsbeispiel,

Das heißt, dass bei diesem zweiten Ausführungsbeispiel der jeweilige Temperaturwert T1 von jedem der ersten Temperatursensoren 92₁ und 92₂ bei einer Erwärmung des jeweiligen Kontaktelements K1 und/oder K2 noch schneller ansteigt.

Darüber hinaus kann ebenfalls ein einziger zweiter Temperatursensor 96 vorgesehen sein, es können aber auch auf gegenüberliegenden Seiten im Bereich 86' des Träger 80' jeweils ein zweiter Temperatursensor 96₁ bzw. 96₂ angeordnet sein, um dadurch die Temperatur an der Oberfläche 102 des Griffbereichs 98 des Steckergehäuses 24 möglichst optimal zu erfassen und gegebenenfalls zwischen den Temperaturwerten, die von den zweiten Temperatursensoren 96₁ und 96₂ erfasst werden, einen Mittelwert zu bilden, um eine ungleiche Erwärmung des Steckergehäuses 24 im Griffbereich 98 durch Mittelung kompensieren zu können.

Ferner ist der Träger 80' beispielsweise in einem zwischen den ersten Temperatursensoren 92₁ und 92₂ und den zweiten Temperatursensoren 96₁ und 96₂ liegenden Zwischenbereich mit einem Durchbruch 122 versehen, so dass jeweils nur seitlich des Durchbruchs 122 verbleibende Stege 124 und 126 den Endbereich 86 mit dem sich an die Stirnseite 82 anschließenden Fußbereich 88 verbinden, so dass durch die Stege 124 und 126 eine thermische Kopplung zwischen dem Endbereich 86' und dem Fußbereich 88 über dem Träger 80 reduziert ist, um eine thermische Kopplung der ersten Temperatursensoren 92₁ und 92₂ mit den zweiten Temperatursensoren 96₁ und 96₂ über den Träger 80' möglichst weitgehend zu reduzieren.

## Patentansprüche

1. Steckereinheit (20) für ein elektrisches Gerät (10), insbesondere für ein Gerät (10) mit hoher Stromaufnahme, umfassend mindestens zwei im Betrieb des Geräts (10) stromführende Strompfade (S1, S2), von denen jeder ein Kontaktelement (K1, K2) mit einem Steckkontaktkörper (42) sowie einem mit dem Steckkontaktkörper (42) elektrisch leitend verbundenen Leitungsanschluss (48) sowie ein mit dem Leitungsanschluss (48) elektrisch leitend verbundenes Leitungsendstück (LE1, LE2) eines zu dem Gerät (10) führenden Zuleitungskabels (18) umfasst, eine Steckerbrücke (30) mit einem Kontaktträger (32), an welchem die Kontaktelemente (K1, K2) so gehalten sind, dass die Steckkontaktkörper (42) auf einer Seite des Kontaktträgers (32) und die Leitungsanschlüsse (48) auf der anderen Seite des Kontaktträgers (32) liegen, und
ein Steckergehäuse (24), welches die Steckerbrücke (30), die Kabelanschlüsse (48) und die Leitungsendstücke (LE1, LE2) umschließt, **dadurch gekennzeichnet, dass** die Steckereinheit (10) mindestens einen ersten Temperatursensor (92) und mindestens einen zweiten Temperatursensor (96) umfasst, dass der mindestens eine erste Temperatursensor (92) in stärkerem Maße thermisch mit mindestens einem der Strompfade (S1, S2) gekoppelt ist als der mindestens eine zweite Temperatursensor (96) und dass der mindestens eine zweite Temperatursensor (96) in stärkerem Maße thermisch mit mindestens einem Referenzbereich (102) des Steckergehäuses (24) gekoppelt ist als der mindestens eine erste Temperatursensor (92).

2. Steckereinheit nach Anspruch 1, **dadurch gekennzeichnet, dass** der mindestens eine erste Temperatursensor (92) durch wärmeleitenden körperlichen Kontakt thermisch mit dem mindestens einen der Strompfade (S1, S2) thermisch gekoppelt ist.

3. Steckereinheit nach Anspruch 1 oder 2, **dadurch gekennzeichnet, dass** der mindestens eine erste Temperatursensor (92) durch wärmeleitenden körperlichen Kontakt mindestens mit einem der Kontaktelemente (K1, K2) thermisch gekoppelt ist.

4. Steckereinheit nach einem der voranstehenden Ansprüche, **dadurch gekennzeichnet, dass** der mindestens eine erste Temperatursensor (92) in wärmeleitendem körperlichen Kontakt mit der Steckerbrücke (30) angeordnet ist und dass insbesondere der mindestens eine erste Temperatursensor (92) in wärmeleitendem körperlichen Kontakt mit dem Kontaktträger (32) angeordnet ist.

5. Steckereinheit nach einem der voranstehenden Ansprüche, **dadurch gekennzeichnet, dass** der Referenzbereich (102) des Steckergehäuses ein Oberflächenbereich (102) des Steckergehäuses (24) ist und dass insbesondere der Oberflächenbereich des Steckergehäuses (24) ein im Griffbereich (98) des Steckergehäuses (24) liegender Oberflächenbereich (102) ist.

6. Steckereinheit nach einem der voranstehenden Ansprüche, **dadurch gekennzeichnet, dass** der mindestens eine zweite Temperatursensor (96) innerhalb des Steckergehäuses (24) und in wärmeleitendem körperlichem Kontakt mit dem Referenzbereich (102) des Steckergehäuses (24) angeordnet ist.

7. Steckereinheit nach einem der voranstehenden Ansprüche, **dadurch gekennzeichnet, dass** der mindestens eine erste Temperatursensor (92) auf einem Träger (80) angeordnet ist.

8. Steckereinheit nach Anspruch 7, **dadurch gekennzeichnet, dass** der Träger (80) an der Steckerbrücke (30) abgestützt ist und dass insbesondere der Träger (80) an dem Kontaktträger (32) abgestützt ist.

9. Steckereinheit nach einem der voranstehenden Ansprüche, **dadurch gekennzeichnet, dass** das Steckergehäuse (24) ein an die Steckerbrücke (30) und das Zuleitungskabel (18) angegossenes Steckergehäuse ist und dass insbesondere das Steckergehäuse (24) die Steckerbrücke (30) und die Leitungsendstücke (LE1, LE2) sowie die Leitungsanschlüsse (48) einbettet.

10. Steckereinheit nach einem der voranstehenden Ansprüche, **dadurch gekennzeichnet, dass** das Steckergehäuse (24) den mindestens einen ersten Temperatursensor (92) und/oder den mindestens einen zweiten Temperatursensor (96) einbettet.

11. Steckereinheit nach einem der voranstehenden Ansprüche, **dadurch gekennzeichnet, dass** der mindestens eine erste Temperatursensor (92) und der mindestens eine zweite Temperatursensor (96) über durch das Zuleitungskabel (18) geführte Temperatursensorleitungen (TL1, TL2, ML) mit einer Schaltung (110) des elektrischen Geräts (10) verbunden sind.

12. Elektrisches Gerät (10), dessen Zuleitungskabel mit einer Steckereinheit (20) versehen ist, **dadurch gekennzeichnet, dass** die Steckereinheit (20) nach einem der voranstehenden Ansprüche ausgebildet ist.

13. Elektrisches Gerät nach Anspruch 12, **dadurch gekennzeichnet, dass** das elektrische Gerät (10) eine Auswerteschaltung (110) umfasst, die einen ersten Temperaturwert (T1) des mindestens einen ersten Temperatursensors (92) und einen zweiten Temperaturwert (T2) des mindestens einen zweiten Temperatursensors (96) erfasst und auswertet.

14. Elektrisches Gerät nach Anspruch 13, **dadurch gekennzeichnet, dass** die Auswerteschaltung (110) den ersten Temperaturwert (T1) und den zweiten Temperaturwert (T2) miteinander vergleicht und dadurch eine strombedingte Erwärmung von mindestens einem der Kontaktelemente (K1, K2) erkennt.

15. Elektrisches Gerät nach einem der Ansprüche 12 bis 14, **dadurch gekennzeichnet, dass** die Auswerteschaltung (110) dann, wenn der erste Temperaturwert (T1) über dem zweiten Temperaturwert (T2) liegt, eine strombedingte Erwärmung von mindestens einem der Kontaktelemente (K1, K2) erkennt, dass insbesondere die Auswerteschaltung (110) aus der Differenz des ersten Temperaturwertes (T1) und des zweiten Temperaturwertes (T2) ein Maß für die strombedingte Erwärmung von mindestens einem der Kontaktelemente (K1, K2) ermittelt und dass insbesondere die Auswerteschaltung dann, wenn das Maß für die strombedingte Erwärmung des mindestens einen Kontaktelements einen Schwellenwert (SW) überschreitet, ein Stromreduzierungssignal (SR) erzeugt.

## Claims

1. A plug unit (20) for an electrical device (10), in particular for a device (10) with high current consumption, comprising at least two current paths (S1,S2) conducting current in operation of the device (10) and each of which comprises a contact element (K1,K2) with a plug contact body (42) and a line connector (48) electrically connected to the plug contact body (42) and, electrically conductively connected to the line connector (48), a line end piece (LE1,LE2) of a feed cable (18) leading to the device (10), a plug bridge (30) with a contact carrier (32), on which the contact elements (K1,K2) are held such that the plug contact bodies (42) lie on one side of the contact carrier (32) and the line connectors (48) lie on the other side of the contact carrier (32), and a plug housing (24), which surrounds the plug bridge (30), the cable connectors (48) and the line end pieces (LE1,LE2), **characterised in that** the plug unit (10) comprises at least one first temperature sensor (92) and at least one second temperature sensor (96), **in that** the at least one first temperature sensor (92) is thermally coupled to at least one of the current paths (S1,S2) to a greater extent than the at least one second temperature sensor (96) and **in that** the at least one second temperature sensor (96) is coupled to at least one reference region (102) of the plug housing (24) to a greater extent than the at least one first temperature sensor (92).

2. A plug unit according to claim 1, **characterised in that** the at least one first temperature sensor (92) is thermally coupled to the at least one current path (S1,S2) by heat-conducting bodily contact.

3. A plug unit according to claim 1 or 2, **characterised in that** the at least one first temperature sensor (92) is thermally coupled by heat-conducting bodily contact at least with one of the contact elements (K1,K2).

4. A plug unit according to any one of the preceding claims, **characterised in that** the at least one first temperature sensor (92) is arranged in heat-conducting bodily contact with the plug bridge (30) and **in that** in particular the at least one first temperature sensor (92) is arranged in heat-conducting bodily contact with the contact carrier (32).

5. A plug unit according to any one of the preceding claims, **characterised in that** the reference region (102) of the plug housing is an upper surface region (102) of the plug housing (24) and **in that** in particular the upper surface region of the plug housing (24) is an upper surface region (102) lying in the gripping region (98) of the plug housing (24).

6. A plug unit according to any one of the preceding claims, **characterised in that** the at least one second temperature sensor (96) is arranged within the plug housing (24) and in heat-conducting bodily contact with the reference region (102) of the plug housing (24).

7. A plug unit according to any one of the preceding claims, **characterised in that** the at least one first temperature sensor (92) is arranged on a carrier (80).

8. A plug unit according to claim 7, **characterised in that** the carrier (80) is supported on the plug bridge (30) and **in that** in particular the carrier (80) is supported on the contact carrier (32).

9. A plug unit according to any one of the preceding claims, **characterised in that** the plug housing (24) is a plug housing moulded on to the plug bridge (30) and the feed cable (18) and **in that** in particular the plug housing (24) embeds the plug bridge (30) and the line end pieces (LE1,LE2) and the line connectors (48).

10. A plug unit according to any one of the preceding claims, **characterised in that** the plug housing (24) embeds the at least one first temperature sensor (92) and/or the at least one second temperature sensor (96).

11. A plug unit according to any one of the preceding claims, **characterised in that** the at least one first temperature sensor (92) and the at least one second temperature sensor (96) are connected with a circuit (110) of the electrical device (10) via temperature sensor lines (TL1,TL2,ML) guided by the feed cable (18).

12. An electrical device (10), the feed cable of which is provided with a plug unit (20), **characterised in that** the plug unit (20) is formed in accordance with any one of the preceding claims.

13. An electrical device according to claim 12, **characterised in that** the electrical device (10) comprises an evaluation circuit (110), which detects and evaluates a first temperature value (T1) of the at least one first temperature sensor (92) and a second temperature value (T2) of the at least one second temperature sensor (96).

14. An electrical device according to claim 13, **characterised in that** the evaluation circuit (110) compares the first temperature value (T1) and the second temperature value (T2) with one another and thereby recognises a current-related warming of at least one of the contact elements (K1,K2).

15. An electrical device according to any one of claims 12 to 14, **characterised in that** the evaluation circuit (110), when the first temperature value (T1) lies above the second temperature value (T2), recognises a current-related warming of at least one of the contact elements (K1,K2), **in that** in particular the evaluation circuit (110), from the difference of the first temperature value (T1) and the second temperature value (T2), determines a measure of the current-related warming of at least one of the contact elements (K1,K2) and **in that** in particular the evaluation circuit generates a current-reducing signal (SR) when the measure of the current-related warming of at least one contact element exceeds a threshold value (SW).

## Revendications

1. Unité formant fiche (20) pour un appareil électrique (10), en particulier pour un appareil (10) avec une consommation de courant élevée, comprenant au moins deux trajets de courant (S1, S2) guidant du courant lors du fonctionnement de l'appareil (10), dont chacun comprend un élément de contact (K1, K2) avec un corps de contact d'enfichage (42) ainsi qu'un raccord de câble (48) relié de manière électriquement conductrice au corps de contact d'enfichage (42) ainsi qu'un embout de câble (LE1, LE2), relié de manière électriquement conductrice au raccord de câble (48), un cordon d'alimentation (18) menant à l'appareil (10), un pont de fiche (30) avec un support de contact (32), sur lequel les éléments de contact (K1, K2) sont maintenus de telle sorte que les corps de contact d'enfichage (42) se situent sur un côté du support de contact (32) et les raccords de câble (48) se situent sur l'autre côté du support de contact (32), et
un boîtier de fiche (24), lequel renferme le pont de fiche (30), les raccords de câble (48) et les embouts de câble (LE1, LE2),
**caractérisée en ce que** l'unité formant fiche (10) comprend au moins un premier capteur de température (92) et au moins un deuxième capteur de température (96), que l'au moins un premier capteur de température (92) est couplé thermiquement à au moins un des trajets de courant (S1, S2) dans une plus grande mesure que l'au moins un deuxième capteur de température (96), et que l'au moins un deuxième capteur de température (96) est couplé thermiquement à au moins une zone de référence (102) du boîtier de fiche (24) dans une plus grande mesure que l'au moins un premier capteur de température (92).

2. Unité formant fiche selon la revendication 1, **caractérisée en ce que** l'au moins un premier capteur de température (92) est couplé thermiquement par un contact physique thermoconducteur à l'au moins un des trajets de courant (S1, S2).

3. Unité formant fiche selon la revendication 1 ou 2, **caractérisée en ce que** l'au moins un premier capteur de température (92) est couplé thermiquement par un contact physique thermoconducteur à au moins à un des éléments de contact (K1, K2).

4. Unité formant fiche selon l'une quelconque des revendications précédentes, **caractérisée en ce que** l'au moins un premier capteur de température (92) est disposé en contact physique thermoconducteur avec le pont de fiche (30), et qu'en particulier l'au moins un premier capteur de température (92) est disposé en contact physique thermoconducteur avec le support de contact (32).

5. Unité formant fiche selon l'une quelconque des revendications précédentes, **caractérisée en ce que** la zone de référence (102) du boîtier de fiche est une zone de surface (102) du boîtier de fiche (24), et qu'en particulier la zone de surface du boîtier de fiche (24) est une zone de surface (102) se trouvant dans la zone de préhension (98) du boîtier de fiche (24).

6. Unité formant fiche selon l'une quelconque des revendications précédentes, **caractérisée en ce que** l'au moins un deuxième capteur de température (96) est disposé à l'intérieur du boîtier de fiche (24) et en contact physique thermoconducteur avec la zone de référence (102) du boîtier de fiche (24).

7. Unité formant fiche selon l'une quelconque des revendications précédentes, **caractérisée en ce que** l'au moins un premier capteur de température (92) est disposé sur un support (80).

8. Unité formant fiche selon la revendication 7, **caractérisée en ce que** le support (80) prend appui sur le pont de fiche (30), et qu'en particulier le support (80) prend appui sur le support de contact (32).

9. Unité formant fiche selon l'une quelconque des revendications précédentes, **caractérisée en ce que** le boîtier de fiche (24) est un boîtier de fiche coulé sur le pont de fiche (30) et le cordon d'alimentation (18), et qu'en particulier le boîtier de fiche (24) intègre le pont de fiche (30) et les embouts de câble (LE1, LE2) ainsi que les raccords de câble (48).

10. Unité formant fiche selon l'une quelconque des revendications précédentes, **caractérisée en ce que** le boîtier de fiche (24) intègre l'au moins un premier capteur de température (92) et/ou l'au moins un deuxième capteur de température (96).

11. Unité formant fiche selon l'une quelconque des revendications précédentes, **caractérisée en ce que** l'au moins un premier capteur de température (92) et l'au moins un deuxième capteur de température (96) sont reliés à un circuit (110) de l'appareil électrique (10) par l'intermédiaire de câbles de capteur de température (TL1, TL2, ML) guidés à travers le cordon d'alimentation (18).

12. Appareil électrique (10), dont le cordon d'alimentation est pourvu d'une unité formant fiche (20), **caractérisé en ce que** l'unité formant fiche (20) est réalisée selon l'une quelconque des revendications précédentes.

13. Appareil électrique selon la revendication 12, **caractérisé en ce que** l'appareil électrique (10) comprend un circuit d'évaluation (110), qui détecte et évalue une première valeur de température (T1) de l'au moins un premier capteur de température (92) et une deuxième valeur de température (T2) de l'au moins un deuxième capteur de température (96).

14. Appareil électrique selon la revendication 13, **caractérisé en ce que** le circuit d'évaluation (110) compare entre elles la première valeur de température (T1) et la deuxième valeur de température (T2) et identifie ainsi un chauffage lié au courant d'au moins un des éléments de contact (K1, K2).

15. Appareil électrique selon l'une quelconque des revendications 12 à 14, **caractérisé en ce que** le circuit d'évaluation (110) identifie ensuite, quand la première valeur de température (T1) est supérieure à la deuxième valeur de température (T2), un chauffage lié au courant d'au moins un des éléments de contact (K1, K2), qu'en particulier le circuit d'évaluation (110) détermine à partir de la différence de la première valeur de température (T1) et de la deuxième valeur de température (T2), une mesure du chauffage lié au courant d'au moins un des éléments de contact (K1, K2), et qu'en particulier le circuit d'évaluation génère ensuite, quand la mesure du chauffage lié au courant de l'au moins un élément de contact dépasse une valeur de seuil (SW), un signal de réduction de courant (SR).
